Europäisches Patentamt

European Patent Office

Office européen des brevets

(19)

(11) Publication number: **0 213 089**
**B1**

(12)

# EUROPEAN PATENT SPECIFICATION

(45) Date of publication of patent specification: **07.12.88**

(51) Int. Cl.⁴: **B 60 G 9/02, F 16 F 1/36**

(21) Application number: **86830210.0**

(22) Date of filing: **17.07.86**

(54) **Resilient support with variable flexibility, particularly for motor vehicle suspensions.**

(30) Priority: **09.08.85 IT 6772085**

(43) Date of publication of application:
**04.03.87 Bulletin 87/10**

(45) Publication of the grant of the patent:
**07.12.88 Bulletin 88/49**

(84) Designated Contracting States:
**DE FR GB SE**

(56) References cited:
**EP-A-0 140 845**
**DE-U-1 906 804**
**FR-A-1 544 131**
**FR-A-2 340 834**
**US-A-1 703 297**
**US-A-1 739 025**
**US-A-3 081 993**
**US-A-4 006 892**

(73) Proprietor: **FIAT AUTO S.p.A.**
**Corso Giovanni Agnelli 200**
**I-10135 Torino (IT)**

(72) Inventor: **Leonardis, Raffaele**
**Corso Unione Sovietica 409**
**I-10135 Torino (IT)**

(74) Representative: **Notaro, Giancarlo et al**
**c/o Jacobacci-Casetta & Perani S.p.A. Via Alfieri,**
**17**
**I-10121 Torino (IT)**

Courier Press, Leamington Spa, England.

## Description

The present invention relates to a resilient support for connecting a movable structure to a fixed support structure, of the known type comprising:

a first metal member for fixing to the support structure,

a second metal member for fixing to the movable structure,

resilient means interposed between to the two metal members, and an endless flexible band connecting the first and second members (US Patent Specification US—A—1703297).

The object of the invention is to provide a resilient support of the type specified above, which can be used, for example, to connect the central part of an axle to the body of a motor vehicle, and which has a simple, reliable and economical structure.

In order to achieve this object, the present invention provides a resilient support of the type specified above, characterised in that the flexible band has a first rectilinear part fixed to the first metal member and a second rectilinear part fixed to the second metal member and disposed parallel to and spaced from the first part, and in that the resilient means are interposed in a compressed condition between the two parts so as to put under tension third and fourth parts of the band which join the ends of the first and second parts together.

The second part is shorter than the first part, whereby the flexible band takes up a trapezoidal configuration in which the two bases are constituted by the first and second parts of the band and in which the two oblique sides are constituted by the third and fourth parts of the band. In a preferred embodiment, the resilient means are constituted by a body of elastomeric material.

By virtue of the particular construction and arrangement, the resilient support is adapted to withstand, without yielding, a load which tends to move the movable member relative to the support structure in a direction parallel to that of the second part of the flexible band, as long as this load is kept below a predetermined threshold value. Above this value, one of the two oblique sides of the band ceases to work under tension and collapses, allowing relative movement betweem the two metal members of the support.

Further characteristics and advantages of the invention will become apparent from the description which follows with reference to the appended drawings, provided purely by way of non-limiting example, in which:

Figures 1 and 2 are two schematic plan views of a rear suspension for motor vehicles utilising a support according to the invention, in two different conditions of operation.

Figure 3 is a schematic view of the resilient support according to the invention, and

Figure 4 is a graph illustrating the operating characteristics of the resilient support of Figure 3.

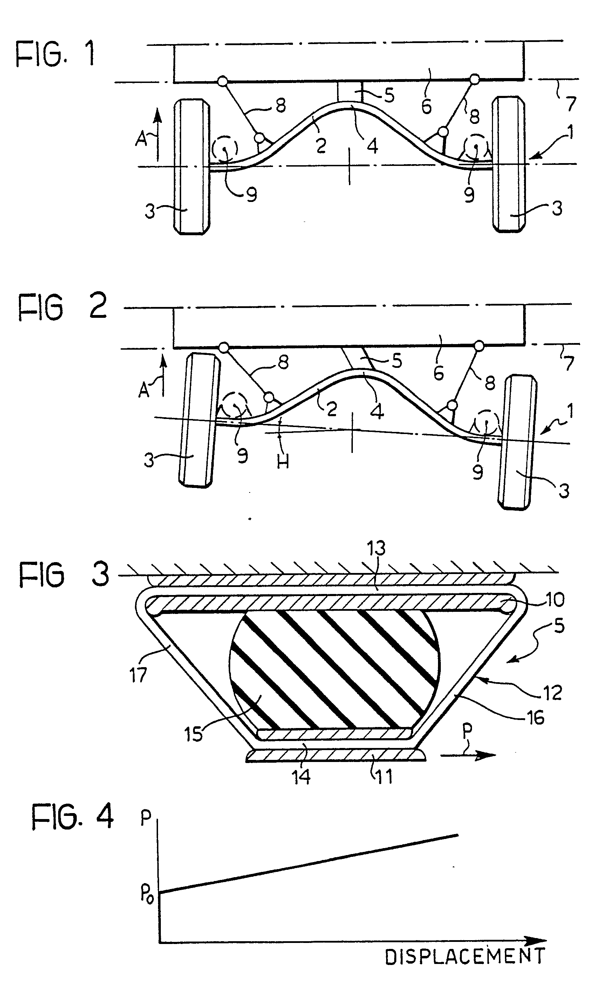

In Figures 1 and 2, a rear suspension for motor vehicles with front wheel drive, generally indicated 1, includes an axle 2 supporting the two rear wheels 3 of the motor vehicle at its ends. A suspension of this type is described and illustrated, for example, in European Patent Application No. 140845 (EP—A—0 140845) filed by the same Applicants.

The axle 2 has essentially a V-shape disposed in a horizontal plane so that its central part (indicated 4) is displaced towards the front of the motor vehicle (the direction of movement of the vehicle being indicated by the arrow A in Figures 1 and 2).

The central part 4 of the axle 2 is articulated to the body of the motor vehicle (indicated 6) about a transverse axis 7. A resilient support 5 (illustrated schematically in Figures 1 and 2) is also interposed in this connection. The axle 2 is also connected to the body 6 by two torque arms 8 each of which has a front end articulated to the body 6 and a rear end articulated to the axle 2 adjacent a respective end portion thereof. The two front ends of the torque arms 8 are aligned along a transverse axis coincident with the axis 7. The resilient means of the suspension are constituted by a pair of helical springs interposed between the end portions of the axle and the body. In the drawings, the points of application of the springs are indicated 9. As is clear from Figures 1 and 2, the two torque arms 8 are disposed in directions which converge on each other towards the rear of the motor vehicle. Moreover, the resilient support 5 is adapted to allow small movements of the axle relative to the body in a transverse direction and small rotational movements of the axle in the horizontal plane.

One embodiment of the resilient support useable for this purpose is illustrated in the document EP—A—0 140 845.

The present invention proposes a new type of resilient support useable for the same purpose, and which has particular characteristics of simplicity and reliability.

As is clear from Figures 1 and 2, which respectively illustrate the suspension in the normal operating condition and in a condition in which the axle is displaced transversely relative to the body (a condition which occurs when the vehicle is cornering), the transverse movements of the axle are also accompanied by rotation of the latter in the horizontal plane as a result of the particular disposition of the torque arms 8. This allows, for example, the rear axle to tilt on bends and give rise to under-steering behaviour of the vehilce. At the same time, it is necessary for the resilient support 5 not to permit transverse movements of the axle relative to the body when the transverse loads are below a predetermined value. Thus, the risk of the axle rotating in the horizontal plane, even during straight line movement, as a result of any transverse forces caused by uneveness of the ground, can be avoided.

Figure 3 illustrates schematically the resilient support according to the invention. It includes a first metal member 10 for fixing to the body of the motor vehicle and a second metal member 11 for fixing to the central part 4 of the axle 2. The two metal members 10, 11 are connected by a flexible band 12, for example of rubber webbing, which has a first part 13 fixed to the metal member 10 and a second part 14 fixed to the metal member 11. A body 15 of elastomeric material is interposed in a compressed condition between the two metal members 11, 10 so as to put under tension the two parts 16, 17 of the band 12 which join the ends of the parts 13, 14 together. The flexible band 12 is in the form of a closed ring and thus assumes a trapezoidal configuration in which the bases are constituted by the two parallel parts 13, 14 of the band while the two oblique sides are constituted by the two parts 16, 17 of the band. The trapezoidal configuration arises from the fact that the part 14 fixed to the metal member 11 is shorter than the part 13 fixed to the metal member 10.

In use, the resilient support 5 withstands a load P acting on the metal member 11 and directed parallel to the part 14 without yielding, as long as this load is kept below a predetermined threshold value $P_0$. Above this load, one of the two oblique parts 16, 17 of the flexible band (the right-hand part or the left-hand part, respectively, according to whether the load P acts towards the right or towards the left with reference to Figure 3) ceases to work under tension and collapses, allowing the displacement of the metal member 11 relative to the metal member 13.

The graph of Figure 4 illustrates the displacement obtained as a function of the load P. As is clear from the graph, the movement is zero as long as the value of the load P does not surpass the threshold value $P_0$.

The resilient support according to the invention has particular advantages from the point of view of simplicity, reliability and silence of operation.

The support according to the invention is also useable, of course, in different applications from that described above by way of example.

Naturally, the principle of the invention remaining the same, the constructional details and forms of embodiments may be varied widely with respect to those described and illustrated purely by way of example.

## Claims

1. Resilient support for connecting a movable structure to a fixed support structure, comprising:
   a first metal member (10) for fixing to the support structure;
   a second metal member (11) for fixing to the movable structure,
   resilient means interposed between the metal members, and an endless flexible band (12) connecting the first and second metal members (10, 11), characterized in that the endless flexible band (12) has a first rectilinear part (13) fixed to the first metal member (10) and a second rectilinear part (14) fixed to the second metal member (11) and disposed parallel to and spaced from the first part (13), and in that the resilient means are interposed in a compressed condition between the two parts so as to put under tension third and fourth parts (16, 17) of the band which join the ends of the first and second parts (13, 14) together.

2. Resilient support according to Claim 1, characterised in that the resilient means are constituted by an element (15) or elastomeric material.

3. Resilient support according to Claim 1, characterised in that the second part (14) of the flexible band is shorter than the first part (13), whereby the band takes up a trapezoidal shape in which the two bases are constituted by the first and second parts (13, 14) and in which the two oblique sides are constituted by the third and fourth parts (16, 17).

## Patentansprüche

1. Elastisches Lager zum Verbindung einer beweglichen Konstruktion mit einer festen Tragkonstruktion
   mit einem ersten Metallkörper (10) zur Befestigung an der Tragkonstruktion,
   mit einem zweiten Metallkörper (11) zur Befestigung an der beweglichen Konstruktion,
   mit zwischen den Metallkörpern angeordneten elastischen Mitteln
   sowie mit einem endlosen flexiblen Band (12), das den ersten und den zweiten Metallkörper (10, 11) miteinander verbindet, dadurch gekennzeichnet,
   daß das endloss flexible Band (12) einen an dem ersten Metallkörper (10) befestigten ersten geradlinigen Abschnitt (13) und einen an dem zweiten Metallkörper (11) befestigten zweiten geradlinigen Abschnitt (14) besitzt, wobei der zweite Abschnitt (14) parallel und im Abstand zu dem ersten Abschnitt (13) angeordnet ist, und daß die elastische Mittel in komprimiertem Zustand derart zwischen den beiden Abschnitten des Bandes eingefügt ist, daß es einen dritten und einen vierten Abschnitt (16, 17) des Bandes unter Spannung setzt, die die Enden des ersten und des zweiten Abschnitts (13, 14) miteinander verbinden.

2. Elastisches Lager nach Anspruch 1, dadurch gekennzeichnet, daß die elastischen Mittel aus einem Element (15) aus elastomerem Werkstoff bestehen.

3. Elastisches Lager nach Anspruch 1, dadurch gekennzeichnet, daß der zweite Abschnitt (14) des flexiblen Bandes kürzer ist als der erste Abschnitt (13), so daß das Band die Form eines Trapezes annimmt, dessen beiden Grundlinien von dem ersten und dem zweiten Abschnitt (13, 14) und dessen beiden schiefen Seiten von dem dritten und dem vierten Abschnitt (16, 17) gebildet sind.

## Revendications

1. Support élastique destiné à relier une structure mobile à une structure support fixe, qui comprend:
   un premier élément métallique (10) destiné à être fixé à la structure support, un deuxième élément métallique (11) destiné à être fixé à la structure mobile,

des moyens élastiques interposés entre les éléments métalliques, et

une bande élastique flexible (12) qui relie les premier et deuxième éléments métalliques (10, 11), caractérisé en ce que la bande flexible sans fin (12) comprend une première partie rectiligne (13) fixée au premier élément métallique (10), et une deuxième partie rectiligne (14), fixée au deuxième élément métallique (11) et disposée parallèlement à la première partie (13) et espacée de celle-ci, et en ce que les moyens élastiques sont interposés dans un état comprimé entre les deux parties de manière à mettre sous tension les troisième et quatrième parties (16, 17) de la bande qui relient les extrémités des première de deuxième parties (13, 14) l'une à l'autre.

2. Support élastique selon la revendication 1, caractérisé en ce que les moyens élastiques sont constitués par un élément (15) en matière élastomère.

3. Support élastique selon la revendication 1, caractérisé en ce que la deuxième partie (14) de la bande flexible est plus courte que la première partie (13), de sorte que la bande prend une forme trapézoïdale dans laquelle les deux bases sont constituées par les première et deuxième parties (13, 14) et dans laquelle les deux côtés obliques sont constitués par les troisième et quatrième parties (16, 17).

FIG. 1

FIG 2

FIG 3

FIG. 4

P

P₀

DISPLACEMENT

1